# EUROPEAN PATENT APPLICATION

(11) **EP 1 912 025 A2**
(43) Date of publication of application: **16.04.2008**
(21) Application number: 07253997.6
(22) Date of filing: 09.10.2007
(51) Int. Cl.: F24D 3/14

(54) **Heating system**

(30) Priority: 09.10.2006 GB 0619957
(71) Applicant: Polypipe Building Products Ltd., Edlington, Doncaster DN12 1ES (GB)
(72) Inventor: Raynor, David, Sheffield S35 0FD (GB); Bennett, Marcus, Doncaster DN5 7AA (GB)
(74) Representative: Johnson, Terence Leslie

(57) **Abstract**

An overfloor or overlay heating system (1) is disclosed, which comprises at least one conduit (2) of a heating medium, and a support element (3) for supporting said conduit *in situ* over an existing floor or wall, the support element having means to increase conductivity of heat from the conduit.

## Description

This application relates to a heating system, and in particular to an overfloor or overlay heating system for application to an existing floor or wall surface.

Underfloor heating systems have long been known as an alternative to traditional radiator type heating systems. Generally speaking they consist of heating elements such as pipes or even spaces disposed under a floor into which a heating medium is circulated. Moreover, various other systems have been proposed to facilitate the provision of underfloor heating, including systems involving modular elements which accommodate the heating medium structures and which are laid underneath or as part of the load bearing structure of the floor. However, the provision of underfloor heating systems in existing buildings with established floorings, and in new buildings in which the flooring may be laid over services such as pipework and electrical cabling remains a problem. For example, conventional systems of underfloor hearing require construction heights of a minimum 50mm and if therefore installed to an existing floor, would raise the floor by this level resulting in unacceptable steps between rooms.

It is an object of the present invention to seek to mitigate problems such as these.

According to the invention there is provided an overfloor or overlay heating system, comprising at least one conduit for conduction of a heating medium, and a support element for supporting said conduit *in situ* over an existing floor or wall, the support element having means to increase conductivity of heat from the conduit.

The support element may comprise a plastic panel which may have at least one recess for receiving a conduit. This provides for simplicity and repeatability as the panel, and ones identical to it, can be moulded.

Suitably, the plastic panel can be made of a filled plastic to provide said means to increase conductivity of heat. Thus the plastic may be "filled" with a metal or other heat conductive element powder, spheres, granules or the like. Alternatively the said means can comprise a metal foil, sheet or film such as an aluminium foil which can be integrally moulded with the plastic panel. The foil may be moulded interiorly of the panel, or on one or more surfaces thereof, for example a major surface.

In practice, the system will include in a preferred embodiment, a plurality of support panels and means adapted to connect adjacent panels together to provide a substantially planar surface (over the floor).

The connection means may comprise a slot or channel, preferably a milled slot or channel, in preferably an upper in use surface of the panels and connection means, such as discs, plates or biscuits, insertable in the slots or channels.

The connection means may also comprise spigots and sockets such as holes in the panels and pegs, dowels or spigots insertable in the holes.

Again, the connection means may comprise dove-tail configuration connectors at the edges of the panels, or integral clips of respective panels.

There may be means for accommodating relative movement between the panels, for example as a result of movement of the floor owing to subsidence, or owing to the effects of thermal expansion and/or contraction.

The said means may be gaps between the panels, or means such as rounded feet or protuberances on the underside, in use, of the panels, which can prevent a degree of sliding.

The panels may in some embodiments each have a self-adhesive on the bottom and/or edges of the panels, and the panels may also be connected together with adhesive tape forming the connection means.

The invention extends to a floor including a system as hereinbefore defined, and to a building including such a floor.

Specific embodiments of the invention will now be described, purely by way of example, in which:
Figure 1 shows a plan view of a first embodiment of an overfloor or overlay heating system according to the invention;
Figure 2 shows a side section through A-A of the system of figure 1;
Figure 3 shows a side elevation of a system of a further embodiment;
Figure 4 shows a side elevation of a further embodiment; and
Figure 5 shows connection of two panels in a system according to an embodiment.

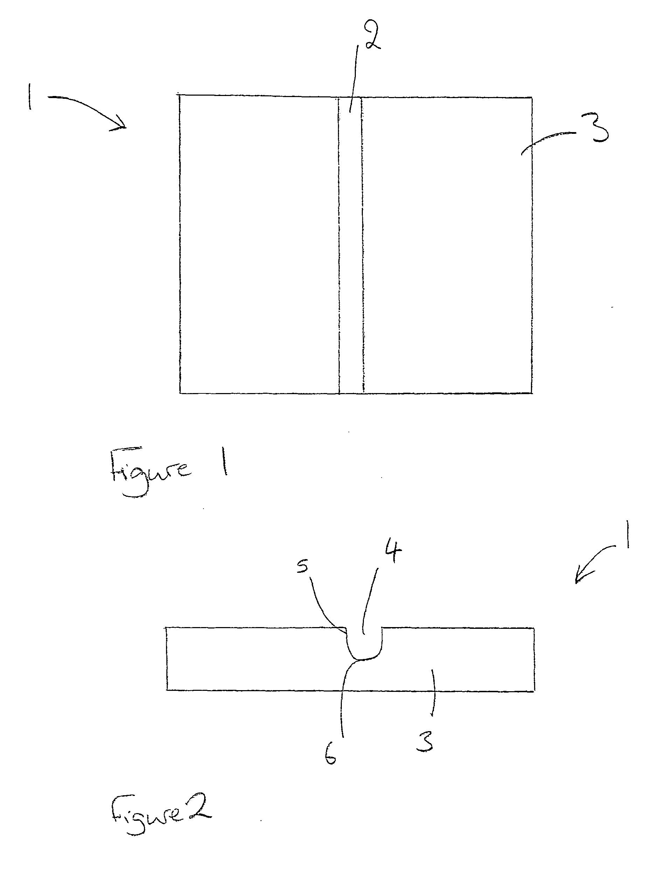

Figure 1 shows an overfloor or overlay heating system 1, comprising at least one conduit 2 of a heating medium (not shown), and a support element 3 for supporting said conduit *in situ* over an existing floor or wall, the support element having means to increase conductivity of heat from the conduit.

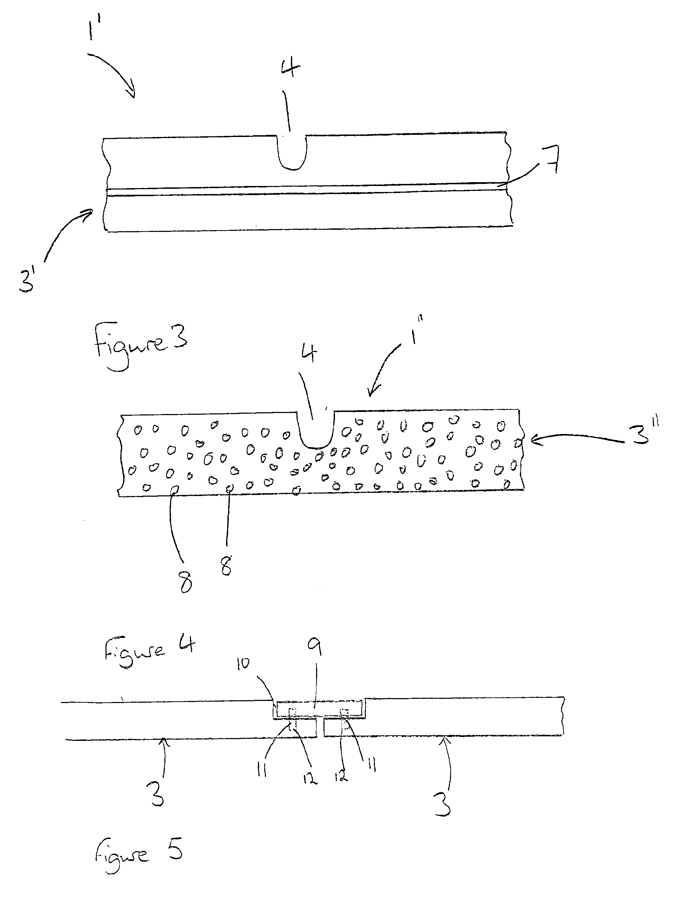

Figure 2 shows a side section through A-A of Figure 1. The central support element 3 comprises a panel about 18mm thick, 800mm long and 600mm wide. The panel is formed with a groove 4 formed in the upper (in use) surface. The groove 4 has substantially parallel walls 5 and an arcuate bottom surface 6. More than one groove 4 may be provided in a single panel, as required. The groove 4 may be shaped within the plane of the panel to provide a passage of the conduit in the panel. The panel is formed of plastic, and may be a thermoplastic material or a thermosetting material. Alternatively, the element 3 may made from fibreboard or cellulose reinforced gypsum, in which case, the grooves 4 may be made by routing or by cutting with a series of saw-blades. Support elements 3 made from a thermoplastic material may be produced by extrusion, and support elements 3 made from a thermoplastic or thermosetting material may be produced by moulding. In both cases, the grooves 4 may be formed as the element 3 is formed, and so there is no need to include a separate step for the formation of these grooves.

Figure 3 shows an alternate embodiment of the system. This embodiment is similar to that shown in figures 1 and 2, so only the differences will be discussed. The element 3' is formed of filled plastic. This can be achieved by including additional additives such as carbon black or metallic fillers to increase the thermal conductivity of the material. In the embodiment of Figure 3, the plastic is filled with one or more metal, in the present embodiment, aluminium, sheets, foil, or films 7 to reflect the heat from the conduit into the room in which the system 1 is laid. In the present embodiment, the aluminium film is integrally moulded in the panel. However, the panel may alternatively be formed in upper and lower halves, with the film 7 sandwiched between the halves and adhered directly to each half, or the film may not extend the whole length of the panel, in which case the halves may be directly afixed to one another where they overlap. As a further alternative, the film may be provided on a surface, eg a major surface of the panel, which may be an, in use, lower surface of the panel.

Figure 4 shows a further alternative embodiment. This corresponds to that disclosed in Figure 3, with the exception that the means to increase the conductivity of heat from the conduit are heat conductive granules 8 within the filled panel of the support element 3", rather than a film. Alternatively, a fine powder may be provided as a heat conductive element. Once again, the heat conductive elements may be metal, and are, in the present embodiment, aluminium.

Multiple panels of any of the embodiments described above can be provided. These can be joined together by way of adhesive, adhesive tape, staples or the like. If staples are used, a lateral region of each support 3 may be provided in which staples can be mounted without otherwise damaging the panel. Relative movement between panels may be accommodated by providing gaps between panels. The connection means may be slightly elastic to allow relative movement of the panels that are connected thereby.

The panels may also comprise rubber feet (not shown) which even out an uneven surface on which the panels are mounted.

The panels of embodiments of the invention include self adhesive on the lower, in use, side thereof, so that they can be adhered to the floor on which they are laid. Alternatively, the panels may be joined together by connection means, which may be inserted into a slot in an upper, in use, surface of two adjacent panels, to provide a substantially planar vertical, in use, surface. Figure 5 shows two panels, connected by connecting means 9 in a recess 10 in a laterally outer region of the panels. One or more such connecting means may be provided, which may run substantially along an entire connecting edge of the panels. In the present embodiment, the connecting means comprises a plate or biscuit, with dowels or pegs 11, which fit into recesses 12 in the panels. Alternatively, the connection means may be adhered to the panels to hold them together. The connection means may alternatively be integral with one of the panels, or alternate between adjacent panels to engage with a cooperating recess in the respective panel. The connection means may be one or more clips, which may be integral with the panels. As a further alternative, the connection means may be one or more dovetail or other suitable joints, to directly join the two panels.

The present invention has been described purely by way of example. Any modifications, additions and omissions apparent to the skilled person also form a part of the scope and spirit of the invention herein described, which also extends to equivelants of the elements, integers and described herein.

## Claims

1. An overfloor or overlay heating system, comprising at least one conduit of a heating medium, and a support element for supporting said conduit *in situ* over an existing floor or wall, the support element having means to increase conductivity of heat from the conduit.

2. A system according to Claim 1, the support element comprising a plastic panel.

3. A system according to Claim 2, the plastic panel comprising a filled plastic adapted to provide said means.

4. A system according to Claim 2, the means comprising a metal.

5. A system according to Claim 4, the metal comprising a metal foil, sheet or film.

6. A system according to Claim 5, the metal foil sheet or film comprising aluminium.

7. A system according to Claim 6, the film comprising an aluminium film integrally moulded with the plastic panel.

8. A system according to any of Claims 2 to 7, there being a plurality of support panels and means adapted to connect adjacent panels together to provide a substantially planar surface.

9. A system according to Claim 8, the connection means comprising a slot in an upper in use surface of the panels and connection means for insertion in the slots.

10. A system according to Claim 9, the connection means comprising insertable discs, plates or biscuits.

11. A system according to Claim 8, the connection means comprising holes in the panels and pegs, dowels or spigots insertable in the holes.

12. A system according to Claim 8, the connection means comprising dove-tail configuration connectors at the edges of the panels.

13. A system according to Claim 8, the connection means comprising integral clips of respective panels.

14. A system according to Claim 8, the connection means comprising adhesive tape.

15. A system according to any of Claims 8 to 14, including means for accommodating relative movement between the panels.

16. A system according to any of Claims 2 to 15, a panel having a self-adhesive on the bottom and/or edges.

17. A system according to any preceding claim, the or each support element including at least one recess for receiving a conduit.

18. An overfloor or overlay heating system, substantially as hereinbefore described.

19. A floor including a system according to any preceding claim.

20. A building, including a floor according to Claim 19.
